# Europäisches Patentamt
## European Patent Office
## Office européen des brevets

(19)

(11) Publication number: **0 007 478**
**B1**

(12) **EUROPEAN PATENT SPECIFICATION**

(45) Date of publication of patent specification: **07.07.82**

(51) Int. Cl.³: **H 02 G 5/00, H 01 B 7/00**

(21) Application number: **79102252.8**

(22) Date of filing: **03.07.79**

(54) Insulating covering for interlocking and electrically isolating parallel bus bars.

(30) Priority: **03.07.78 DK 3000/78**

(43) Date of publication of application:
**06.02.80 Bulletin 80/3**

(45) Publication of the grant of the patent:
**07.07.82 Bulletin 82/27**

(84) Designated Contracting States:
**BE CH DE FR GB IT LU NL SE**

(56) References cited:
**DE - B - 1 077 737**
**FR - A - 1 124 245**

(73) Proprietor: **Aktieselskabet Laur. Knudsen Nordisk Elektricitets Selskab**
**Haraldsgade 53**
**DK-2100 Kopenhagen O (DK)**

(72) Inventor: **Pedersen, Jens**
**Praesteholmen 14**
**DK-2630 Taastrup (DK)**
Inventor: **Pedersen, Kurt Flemming Lindegaard**
**Hjortespringet 1**
**DK-3400 Hilleroed (DK)**
Inventor: **Petersen, Poul Strange**
**Rydsletten 23, st.tv.**
**DK-2720 Vanloese (DK)**

(74) Representative: **Vossius . Vossius . Tauchner . Heunemann . Rauh**
**Siebertstrasse 4 P.O. Box 86 07 67**
**D-8000 München 86 (DE)**

Courier Press, Leamington Spa, England.

## Insulating covering for interlocking and electrically isolating parallel bus bars

The invention relates to an insulating covering for interlocking and electrically isolating parallel bus bars such as of the kind used for connecting other bus bars.

Bus bars are usually flat or sectioned and are primarily used in cabinets for electrical distribution. When dimensioning such bus bars, which run in parallel, due account must be taken not only of the purely mechanical forces, but also of the electromagnetic forces which arise between two parallel bus bars carrying a current. With regard to these electromagnetic forces, it is necessary when dimensioning the bus bars to make allowance for the maximum forces possible, such as those which develop in cases of short circuits. The electromagnetic forces between two parallel bus bars are proportional to both the square of the current and to the length of the bus bars. They play a vital role in cases of short circuits and it is important that the bus bars are not deformed and that the supports for the bus bars do not fracture. Given a short circuit current, one has to determine the electromagnetic forces for every bus bar length and distance between supports.

A solution to these problems has been disclosed in US—A—2 969 421, which describes a bus bar comprising an elongated, preferably extruded member with a cross section including a rectangular body section and a locking element. The locking element has a dimension, taken along a line parallel to the juncture line between the body section and locking element, which is greater than the dimension of the juncture line. A locking groove is cut into the body section to enable it to receive the locking element of a second bus bar. The locking groove is of substantially the same shape as the locking element but is made slightly larger so that it can also receive a member which insulates the bus bars from each other. The bus bar described in the cited patent, however, has the following disadvantages: the interlocking which is effected by sliding the elements lengthwise with respect to each other has to be performed with great care because of the relatively thin insulating member which has the dimensions of an insulating foil and which has to stay in place during and after assembly. Furthermore, the creepage distance is defined largely by the amount of insulating foil protruding between adjacent bus bars.

The FR—A—1 124 245 describes an insulated electrical conductor with at least two flat surfaces, the insulating envelope optionally being provided with a profile allowing a tongue and groove assembling or coupling of various conductors.

The DE—B—1 077 737 describes an electrical compound cable composed of a plurality of insulated cables, the insulation of the cables being elastically deformable, thus forming elastic coupling means in a tongue and groove manner including those of a dovetail shape, so that the cables can easily be assembled and disassembled.

The coupling means of both these references, however, are not able to withstand strong transversal repulsive forces, e.g. electromagnetic forces, exerted on parallel bus bars, and thus cannot prevent the bus bars from being deformed, separated or even fractured.

It is an object of the invention to provide a bus bar which can interlock to give the resulting advantages and at the same time provide possibilities for changing conductor material without the need to resort to specially extruded profiles. Furthermore, it is desired to have creepage distances which are at least as good as in the cases where individual bus bars are supported by conventional supports.

The problem underlying the invention is solved by the features of claim 1.

The insulating covering according to the invention is characterized in that the insulation is provided with longitudinally extending slots and bulbs in order that two or a plurality of bus bars disposed side by side may be interlocked (against the influence of transverse forces). In this manner it is ensured that the bus bars are mutually interconnected mechanically so that the strength derived from the interconnection is proportional to the length of the bus bars. Thus there will be only one upper limit for the value of the short circuit currents, irrespective of the length of the bus bars involved, thus avoiding the need for the control calculations otherwise necessary every time a new construction has been made. The function of the supports will then be reduced to that of carrying the bus bars and resisting external forces of a mechanical nature. The insulating covering according to the invention thus forms an essential structural part of a bus bar configuration and may advantageously be manufactured by extrusion, thus providing profiles which can be pushed lengthwise until they engage with each other.

An embodiment of the invention is characterized in that the slots and bulbs are identical and disposed in an axially symmetrical fashion. In this way the interlocking may be effected either lengthwise or by hinging the two parts into engagement with subsequent straightening to the plane of the bus bars. If the insulating covering according to the invention is to be used with bus bars with a rectangular cross section, it may be further characterized in that the interlocking sections are disposed on the insulation adjacent to the shorter sides of the rectangle. This provides a particularly advantageous manner of interconnecting bus bars which is very resistant to the electromagnetic forces that may develop between the bars, since these forces act in the same plane as that defined by the flat bus bars. Furthermore, this flat interconnection saves space.

Finally, the insulating covering may be characterized in that one or a plurality of dovetail sections may be provided lengthwise on the insulation along the longer sides of the rectangle. It is thereby possible to interconnect the bus bars in two planes and to fasten them to supports, especially if the bus bars are long.

The invention is to be described further with reference to the drawing, in which

Fig. 1 shows a cross section of an insulating covering according to a first embodiment of the invention;

Fig. 2 shows a cross section of two interlocked insulating coverings according to a second embodiment of the invention,

Fig. 3 shows a cross section of an insulating covering according to a third embodiment, and

Figure 4 shows a three-dimensional representation of an interconnection as shown in Fig. 2.

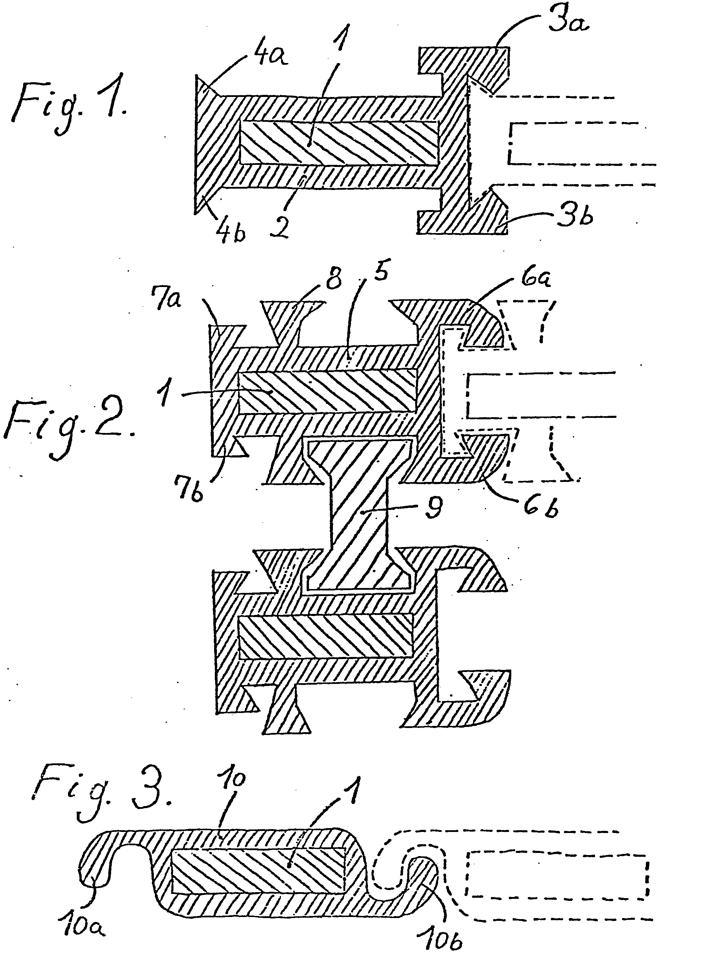

Fig. 1 shows a rectangular, current carrying bus bar 1 which is surrounded by an insulating layer of a plastic material. The plastic insulation 2 is provided with bulbs 3a, 3b, 4a, and 4b which are so disposed that one end of the plastic insulation 2 carrying the bulbs 4a and 4b may be slid into another plastic insulation 2 in that end carrying the bulbs 3a and 3b. Such an interlocking is indicated in Fig. 1 by broken lines. The current carrying bus bar 1 may equally be slid in and out of the plastic insulation 2.

Fig. 2 shows another type of plastic insulation 5 which has a dovetail section 8 on each side of the insulation apart from the bulbs 6a, 6b and 7a, 7b which correspond to the bulbs 3a, 3b and 4a, 4b in Fig. 1. By means of these extra bulbs the bus bars may be interconnected in two planes by means of the interconnecting elements 9, which may also serve as spacers in one plane, so improving the cooling of the bus bars.

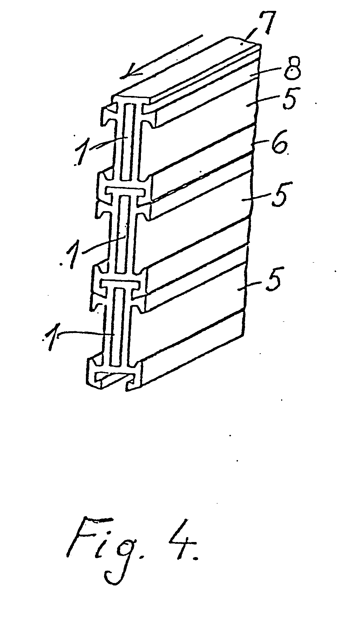

The plastic insulation 10 shown in Fig. 3 is provided with axially symmetrical bulbs 10a and 10b disposed at the shorter sides of the rectangular plastic insulation 10. Such insulations may be interconnected either by sliding them axially or by hinging them from the side. At the moment of hinging the two insulations 10 are perpendicular to each other, whereupon the hinge thereby formed is straightened out and the interconnection established. This manner of interconnection is important in cases where space does not permit axial interconnection of the plastic insulations.

Fig. 4 shows three bus bars 1 surrounded by plastic insulations 5 which are interconnected in one plane. The plastic insulations are connected and disconnected by sliding them in the direction of the arrow.

In the description of the invention bus bars with a rectangular cross section have been shown as an example. Obviously the invention is not limited to these embodiments, for bus bars of any other cross section, e.g. circular, may be provided with insulating coverings with suitable bulbs for interconnecting several bus bars.

The greatest advantage is obtained by manufacturing the insulating coverings in plastic by means of ordinary extrusion equipment, since all necessary tolerance requirements for the bulbs can then be met. The insulating coverings may, of course, be made of other suitable materials, as may the spacers and supports.

It should be noted that although bulbs 3a, 3b, 4a and 4b will often run along the whole length of the bus bar because they will be extruded along with it, the bulbs may alternatively be provided in shorter pieces disposed at intervals from each other.

The action of the interconnections between the insulating coverings may be improved with the aid of a cement.

## Claims

1. An insulating covering comprising insulation (2, 5, 10) for electrically isolating a bus bar (1) from one or more parallel bus bars (1), adjacent bus bars (1) being interlocked by interengagement of a longitudinal bulb (3a, 3b, 4a, 4b; 6a, 6b, 7a, 7b; 10a, 10b) with a longitudinal slot in a manner withstanding transverse maximum forces possible derived from the upper limit for the value of the short circuit currents between the bus bars (1), characterised in that the insulating covering is provided with a bulb (3a, 3b, 4a, 4b; 6a, 6b, 7a, 7b; 10a, 10b) and a complementarily shaped slot whereby two or more such coverings may be mutually interlocked to withstand said transverse forces.

2. An insulating covering according to claim 1, characterised by two bulbs (10a, 10b) with identical cross sections and which are disposed axially symmetrically.

3. An insulating covering according to claim 1 or 2 for use with a bus bar (1) with a rectangular cross section, characterised in that the bulbs (6a, 6b, 7a, 7b) are disposed on the insulation (5) at the shorter sides of the rectangle.

4. An insulating covering according to claim 3, characterised in that the insulation (5) has one or a plurality of dovetail sections (8) at the longer sides of the rectangle.

## Patentansprüche

1. Isolierhülle mit einer Isolierung (2, 5, 10) zum elektrischen Isolieren einer Sammelschiene (1) von einer oder mehreren parallelen Sammelschienen (1), wobei benachbarte Sammelschienen (1) durch Eingriff eines in Längsrichtung ausgebildeten Wulstes (3a, 3b, 4a, 4b; 6a, 6b, 7a, 7b; 10a, 10b) mit einer in Längsrichtung ausgebildeten Ausnehmung derart verriegelt sind, daß die Verriegelung möglichst großen transversalen Kräften standhält, die vom Höchstwert der Kurzschlußströme zwischen den Sammelschienen (1) hervorgerufen werden, dadurch gekennzeichnet,
daß die Isolierhülle einen Wulst 3a, 3b, 4a, 4b,
6a, 6b, 7a, 7b; 10a, 10b) und eine komple-
mentär geformte Ausnehmung aufweist, wo-
durch zwei oder mehrere derartige Isolierhüllen
miteinander verriegelt werden können und den
genannten transversalen Kräften standhalten.

2. Isolierhülle nach Anspruch 1, gekennzeichnet durch zwei Wulste (10a, 10b) mit
identischen Querschnitten, die axial-
symmetrische angeordnet sind.

3. Isolierhülle nach Anspruch 1 oder 2 zur
Verwendung mit einer Sammelschiene (1) mit
rechteckigem Querschnitt, dadurch gekennzeichnet, daß die Wulste (6a, 6b, 7a, 7b) an den
kürzeren Seiten des Rechtecks auf der Isolierung 5 angeordnet sind.

4. Isolierhülle nach Anspruch 3, dadurch
gekennzeichnet, daß die Isolierung (5) an den
längeren Seiten des Rechtecks einer oder
mehrere schwalbenschwanzförmige Abschnitte
(8) aufweist.

**Revendications**

1. Enveloppe isolante comportant une isolation (2, 5, 10) pour isoler électriquement une
barre omnibus (1) d'une ou de plusieurs barres
omnibus parallèles (1), les barres omnibus
ajdacentes (1) étant accouplées par l'emboîte-
ment d'une nervure longitudinale (3a, 3b; 4a,
4b; 6a, 6b; 7a, 7b; 10a, 10b) dans une rainure
longitudinale de façon à résister aux forces
transversales maximales découlant de la limite
supérieure pour la valeur des courants de court-
circuit entre les barres omnibus (1), caractérisée en ce que l'enveloppe isolante est
pourvue d'une nervure (3a, 3b; 4a, 4b; 6a, 6b;
7a, 7b; 10a, 10b) et d'une rainure de profil
complémentaire, deux ou plusieurs enveloppes
de ce genre pouvant être mutellement
accouplées pour résister aux forces transversales précitées.

2. Enveloppe isolante selon la revendication
1, caractérisée en ce qu'elle comprend deux
nervures (10a, 10b) de sections droites identiques et qui sont disposées selon une symétrie
axiale.

3. Enveloppe isolante selon la revendication
1 ou 2, pour être utilisée avec une barre omnibus (1) de section droite rectangulaire, caractérisée en ce que les nervures (6a, 6b; 7a, 7b)
sont aménagées sur l'isolation (5), sur les petits
côtés du rectangle.

4. Enveloppe isolante selon la revendication
3, caractérisée en ce que l'isolation (5) a une ou
plusieurs sections en queue d'aronde (8) sur les
grands côtés du rectangle.

Fig. 1.

Fig. 2.

Fig. 3.

Fig. 4.